# EUROPÄISCHE PATENTANMELDUNG

(11) **EP 1 989 938 A2**
(43) Veröffentlichungstag der Anmeldung: **12.11.2008**
(21) Anmeldenummer: 08103869.7
(22) Anmeldetag: 08.05.2008
(51) Int. Cl.: A01J 5/08

(54) **Verbindung von Zitzengummi und Melkbecherhülse**

(30) Priorität: 11.05.2007 DE 102007022800
(71) Anmelder: WestfaliaSurge GmbH, 59199 Bönen (DE)
(72) Erfinder: Auburger, Markus, 59558 Lippstadt (DE); Frenser, Reinhard, 33378 Rheda-Wiedenbrück (DE); Rohring, Thomas, 44141 Dortmund (DE); Berentzen, Michael, 59494 Soest (DE); Neumann, Martin, 59302 Oelde (DE); Grüter, Thomas, 59556 Lippstadt (DE); Austermann, Michael, 59387 Ascheberg (DE)
(74) Vertreter: Neumann, Ditmar

(57) **Zusammenfassung**

Der Gegenstand der Erfindung bezieht sich auf einen Melkbecher mit einer Melkbecherhülse, in der ein Zitzengummi angeordnet ist.

## Beschreibung

Der Gegenstand der Erfindung bezieht sich auf einen Melkbecher.

Zum maschinellen Melken von Tieren werden Melkbecher verwendet. Der Melkbecher weist eine Melkbecherhülse auf, in der ein Zitzengummi angeordnet ist. Ein Zitzengummi oder auch Melkformschlauch genannt, kann unterschiedliche Ausgestaltungen aufweisen. Durch die US 5,007,378 ist beispielsweise ein Zitzengummi zur Verwendung an einem Melkbecher mit einem Kopfteil, an dem eine Dichtlippe vorgesehen ist, die eine Einführöffnung für die Zitze bildet, bekannt. Das Kopfteil ist mit einem Schaftteil verbunden.

Bei der überwiegenden Anzahl der bekannten Ausgestaltungen eines Zitzengummis ist dieses einstückig ausgebildet. Im Hinblick darauf, dass das Schaftteil des Zitzengummis zur Anlage an die Zitze gebracht wird, ist es zweckmäßig, dass das Schaftteil aus einem flexiblen Material besteht. Darüber hinaus wird gefordert, dass das Zitzengummi leicht gereinigt werden kann und insbesondere mit dem Lebensmittel Milch verträglich ist.

Das Zitzengummi bildet mit der Melkbecherhülse eine Kammer, die mit einem entsprechenden Vakuum beaufschlagt wird. Hierzu ist es erforderlich, dass der Raum zwischen dem Zitzengummi und der Melkbecherhülse luftdicht abgeschlossen ist. Aus der US 5,007,378 ist ein Verbindungselement bekannt, welches in den Endbereich des Zitzengummis eingeführt wird, so dass das Zitzengummi gespreizt und der Mantel des Endbereichs des Zitzengummis zur Anlage an einen Rand einer Öffnung der Melkbecherhülse gebracht wird, so dass eine luftdichte Verbindung zwischen dem Endbereich des Zitzengummis und der Melkbecherhülse hergestellt wird. Mit dem Verbindungselement kann ein Milchschlauch verbunden sein.

Darüber hinaus sind Melkbecher bekannt, bei denen das Zitzengummi und der Milchschlauch als eine integrale Einheit ausgebildet werden. Die Montage einer solchen Einheit erfolgt derart, dass der Milchschlauch durch die Melkbecherhülse hindurchgeführt wird, wobei die zur Montage notwendige Kraft für die luftdichte Verbindung zwischen Zitzengummi und Melkbecher über den Milchschlauch aufgebracht werden kann.

Die Montage eines gattungsgemäßen Melkbechers, wie er in der US 5,007,378 beschrieben ist, ist wesentlich aufwändiger. Im Hinblick darauf, dass auch ein Zitzengummi einem Verschleiß unterliegt, ist es notwendig, dieses auszuwechseln, was mit nicht unerheblichem Kraft- und Zeitaufwand verbunden ist.

Hiervon ausgehend liegt der vorliegenden Erfindung die Zielsetzung zugrunde, einen Melkbecher anzugeben, welcher einfacher montiert werden kann.

Diese Aufgabe wird erfindungsgemäß durch einen Melkbecher mit den Merkmalen des Anspruchs 1 gelöst. Vorteilhafte Weiterbildungen und Ausgestaltungen des erfindungsgemäßen Melkbechers sind Gegenstand der Unteransprüche.

Der erfindungsgemäße Melkbecher weist eine Melkbecherhülse sowie ein in der Melkbecherhülse angeordnetes Zitzengummi auf. Das Zitzengummi hat einen Kopf und einen dem Kopf gegenüberliegenden Endbereich. Mit dem Endbereich ist ein Verbindungselement verbunden. Das Verbindungselement ist lösbar mit der Melkbecherhülse verbunden.

Durch diese erfindungsgemäße Ausgestaltung des Melkbechers wird eine vereinfachte Montage bzw. Demontage des Zitzengummis erreicht. Hierdurch wird auch die Auswechselbarkeit des Zitzengummis vereinfacht, so dass ein Auswechseln des Zitzengummis auch durch ungeübtes Personal ausgeführt werden kann.

Besonders bevorzugt ist eine Ausgestaltung des erfindungsgemäßen Melkbechers, bei der das Verbindungselement formschlüssig mit der Melkbecherhülse verbunden ist. Hierzu weist das Verbindungselement und/oder der Melkbecher entsprechende Mittel auf, durch die der Formschluss zwischen dem Verbindungselement und der Melkbecherhülse erreicht werden kann. Bei den Mitteln kann es sich um entsprechende Vorsprünge und Ausnehmungen handeln, die aneinander angepasste Konturen aufweisen. Die Vorsprünge und die Ausnehmungen können am Verbindungselement und/oder der Melkbecherhülse vorgesehen sein.

Die Verbindung kann zusätzlich oder alternativ kraftschlüssig sein, so dass ein unbeabsichtigtes Lösen des Verbindungselementes von der Melkbecherhülse vermieden wird.

Gemäß einer noch weiteren vorteilhaften Ausgestaltung des erfindungsgemäßen Melkbechers wird vorgeschlagen, dass das Verbindungselement mittels einer Rastverbindung mit der Melkbecherhülse verbunden ist.

Nach einer noch weiteren vorteilhaften Ausgestaltung des erfindungsgemäßen Melkbechers wird vorgeschlagen, dass das Verbindungselement wenigstens zwei sich in axialer Richtung erstreckende federelastische Stege aufweist, welche mit der Melkbecherhülse verbunden sind. Durch die federelastischen Stege wird erreicht, dass diese selbsttätig in die Verbindungsposition eingreifen, wenn diese eine vorgegebene Position relativ zur Melkbecherhülse eingenommen haben. Besonders bevorzugt ist dabei eine Ausgestaltung, bei der der Steg einen Vorsprung aufweist, der an einem Randbereich der Melkbecherhülse anliegt. Die Melkbecherhülse weist dabei vorzugsweise einen Durchmesser auf, der geringer ist, als der Abstand der zwei Stege, so dass diese bei der Montage des Zitzengummis durch die Melkbecherhülse hindurchgeführt werden, wobei diese dann im Endbereich der Melkbecherhülse zusammengedrückt werden und nachdem die Stege aus der Melkbecherhülse heraustreten, diese entsprechend auffedern können.

Die Stege sind vorzugsweise diametral angeordnet. Sind mehr als zwei Stege vorgesehen, so ist es besonders bevorzugt, dass diese in Umfangsrichtung betrachtet äquidistant zueinander ausgebildet sind.

Nach einem noch weiteren erfinderischen Gedanken wird ein Melkbecher umfassend eine Melkbecherhülse, ein in der Melkbecherhülse angeordnetes Zitzengummi, welches einen Kopf und einen dem Kopf gegenüberliegenden Endbereich aufweist, und ein Verbindungselement, welches einen Milchschlauch mit dem Zitzengummi verbindet, vorgeschlagen, wobei der Milchschlauch wenigstens ein Mittel aufweist, durch welches das Zitzengummi in der Melkbecherhülse festgelegt wird.

Durch diese erfindungsgemäße Ausgestaltung des Melkbechers wird insbesondere die Montage des Melkbechers vereinfacht. Es besteht die Möglichkeit, dass das Zitzengummi mit dem Verbindungselement und den Milchschlauch mit dem Verbindungselement zu einer Baueinheit auszubilden, wobei dann der Milchschlauch vom Kopf her durch den Endbereich der Melkbecherhülse hindurch gezogen wird, bis vermittels des Mittels das Zitzengummi in der Melkbecherhülse festgelegt wird.

Bevorzugt ist eine Ausgestaltung, bei der der Milchschlauch wenigstens einen sich in Umfangsrichtung erstreckenden Kragen aufweist, welcher vorzugsweise zur Anlage an eine Stirnfläche der Melkbecherhülse bringbar ist. Durch diese Maßnahme kann optisch überprüft werden, ob eine ordnungsgemäße Festlegung des Zitzengummis in der Melkbecherhülse erfolgte. Darüber hinaus wird eine Demontage des Melkbechers vereinfacht.

Es besteht auch die Möglichkeit, dass beispielsweise in der Innenmantelfläche des Endbereichs der Melkbecherhülse entsprechende Ausnehmungen vorgesehen sind, in die die Mittel des Milchschlauchs eingreifen. Die Verbindung des Milchschlauchs mit der Melkbecherhülse kann form- und/oder kraftschlüssig erfolgen.

Weist der Milchschlauch einen Kragen auf, der im Wesentlichen in Umfangsrichtung des Milchschlauchs ausgebildet ist, weist dieser vorzugsweise einen im Wesentlichen dreieckförmigen Querschnitt auf, wobei die eine Fläche des Kragens eine Einführschräge bildet.

Zu einer noch weiteren Vereinfachung der Montage des Zitzengummis in der Melkbecherhülse wird vorgeschlagen, dass das Verbindungselement wenigstens einen Werkzeugeingriffsbereich aufweist, so dass durch ein entsprechendes Werkzeug eine Verbindung mit dem Verbindungselement hergestellt werden kann, so dass dieses unter Aufbringung einer Zugkraft in eine Verbindungsposition mit der Melkbecherhülse bewegt werden kann.

Gemäß einer noch weiteren vorteilhaften Ausgestaltung des Melkbechers wird vorgeschlagen, dass der Endbereich des Zitzengummis am Innenmantel der Melkbecherhülse anliegt. Hierdurch wird eine fluiddichte Verbindung zwischen dem Endbereich des Zitzengummis und der Melkbecherhülse erreicht.

Das Verbindungselement ist vorzugsweise wenigstens formschlüssig mit dem Zitzengummi verbunden. Zusätzlich oder alternativ kann das Verbindungselement auch kraftschlüssig mit dem Zitzengummi verbunden sein.

Zur Verbindung des Zitzengummis mit dem Verbindungselement wird vorgeschlagen, dass das Verbindungselement einen im Wesentlichen pilzartig ausgebildeten Abschnitt aufweist. Das Zitzengummi weist eine entsprechend gestaltete Aufnahme auf. Die Ausgestaltungen des Zitzengummis und des Verbindungselementes sind so gewählt, dass während der Montage und auch im Betrieb durch die Zugkraft des Zitzengummis auf die Verbindung, diese bestehen bleibt.

Gemäß einer noch weiteren vorteilhaften Ausgestaltung des Melkbechers wird vorgeschlagen, dass der Außendurchmesser des Endbereichs des Zitzengummis, wenn dieses mit dem Verbindungselement verbunden ist, größer ist, als der Außendurchmesser des Endbereichs des Zitzengummis im unverbundenen Zustand. Hierdurch wird eine Aufweitung des Endbereichs des Zitzengummis erreicht, wodurch die fluiddichte Verbindung zwischen dem Zitzengummi und der Melkbecherhülse in vorteilhafter Weise verbessert wird.

Zu einer noch weiteren Verbesserung der fluiddichten Verbindung zwischen dem Zitzengummi und der Melkbecherhülse wird vorgeschlagen, dass die Melkbecherhülse einen sich verjüngenden Endbereich aufweist.

Zur fluiddichten Verbindung des Kopfes des Zitzengummis mit der Melkbecherhülse wird vorgeschlagen, dass die Melkbecherhülse wenigstens eine Wulst auf weist, welche in einen entsprechend ausgebildeten Halterand des Kopfes eingreift.

Das Verbindungselement ist vorzugsweise aus einem thermoplastischen Werkstoff hergestellt. Das Verbindungselement spreizt die Einspanngeometrie des Zitzengummis auf. Dadurch, dass die Verbindung zwischen dem Zitzengummi und dem Verbindungselement vorzugsweise über pilzartige Ausgestaltungen des Verbindungselementes erfolgt, wird erreicht, dass die Verbindung auch dann stabil ist, wenn die Vorspannkraft des Zitzengummis auf diese einwirkt. Das Verbindungselement ist vorzugsweise aus einem lebensmittelunbedenklichen, thermoplastischen Kunststoff gebildet.

Zur Vereinfachung der Montage wird des Weiteren vorgeschlagen, dass durch entsprechende Aussparungen oder Vorsprünge die Bauteile Melkbecherhülse, Zitzengummi und Verbindungselement lediglich in vorgegebenen Positionen zueinander verbindbar sind. Hierdurch wird auch eine drehsichere Verbindung zwischen den Bauteilen, insbesondere zwischen dem Zitzengummi und dem Verbindungselement, erreicht.

Das Verbindungselement weist vorzugsweise einen unteren Abschnitt auf, der beispielsweise mit einem kurzen Milchschlauch verbindbar ist. Der kurze Milchschlauch kann mit dem Verbindungselement verbunden sein, wenn dieses bereits mit dem Zitzengummi verbunden ist, so dass das Zitzengummi, das Verbindungselement und der kurze Milchschlauch eine Baueinheit bilden. Hierdurch kann die Montage vereinfacht werden, da durch eine Zugkraft auf den Milchschlauch die Montage des Zitzengummis in der Melkbecherhülse erreicht werden kann.

Die Melkbecherhülse ist vorzugsweise aus einem metallischen Werkstoff, insbesondere aus einem nichtrostenden Stahl, gebildet. Es besteht auch die Möglichkeit, dass die Melkbecherhülse aus einem Kunststoff, insbesondere einem thermoplastischen Kunststoff, gebildet ist. Im Hinblick darauf, dass der Melkbecher zur Verwendung an unterschiedliche Tiere gedacht ist, wird auch die Möglichkeit geschaffen, insbesondere die Melkbecherhülse mit Zusatzgewichten auszustatten, durch die das Gesamtgewicht des Melkbechers in vorteilhafter Weise variiert werden kann.

Weitere Einzelheiten und Vorteile der Erfindung werden anhand des in der Zeichnung dargestellten Ausführungsbeispiels erläutert, ohne dass der Gegenstand der Erfindung auf dieses konkrete Ausführungsbeispiel beschränkt wird.

Es zeigen:
- Fig. 1:: schematisch und in einer perspektivischen Ansicht einen oberen Abschnitt einer Melkbecherhülse,
- Fig. 2:: den oberen Abschnitt der Melkbecherhülse nach Fig. 1 in Verbindung mit einem Zitzengummikopf,
- Fig. 3:: im Schnitt die Anordnung des Zitzengummis in der Melkbecherhülse im unteren Bereich des Melkbechers,
- Fig. 4:: ein Verbindungselement,

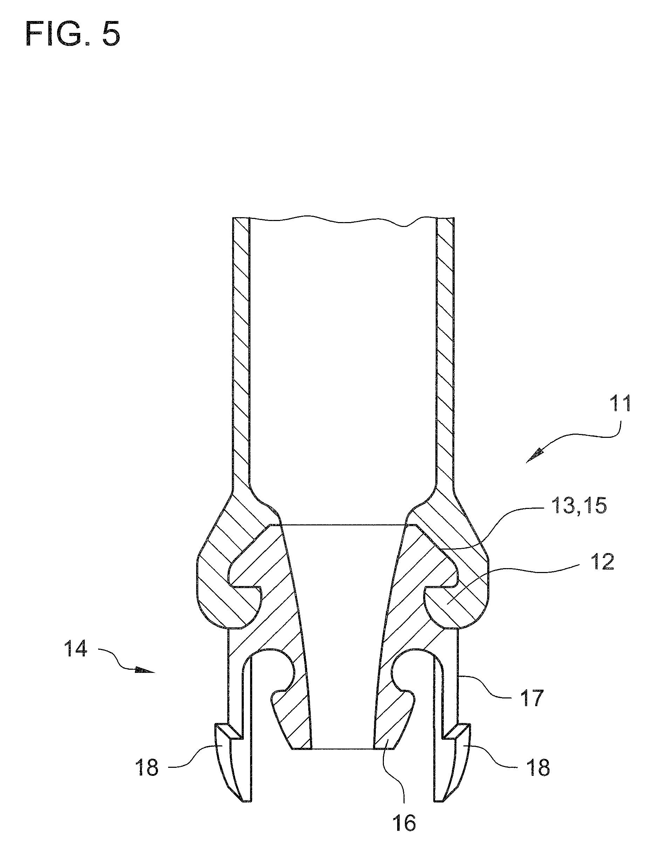

- Fig. 5:: die Verbindung zwischen einem unteren Ende des Zitzengummis und dem Verbindungselement nach Fig. 4 im Schnitt,

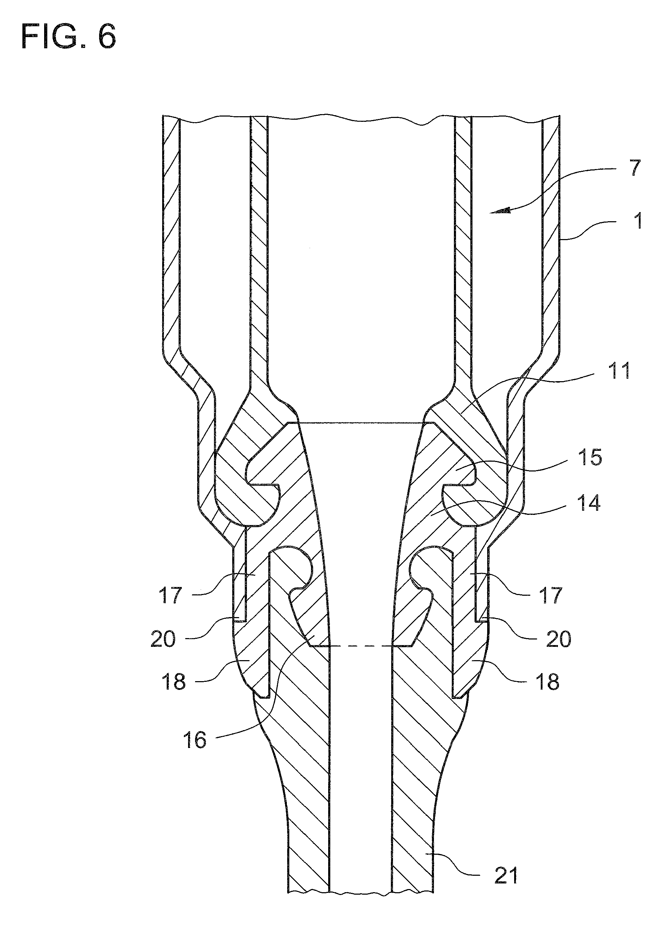

- Fig. 6:: einen Endbereich des Melkbechers mit Zitzengummi, Verbindungselement und kurzem Milchschlauch sowie Melkbecherhülse in einer Schnittdarstellung und
- Fig. 7:: einen Endbereich des Melkbechers mit Zitzengummi, Verbindungselement und kurzem Milchschlauch sowie Melkbecherhülse in einer Schnittdarstellung.

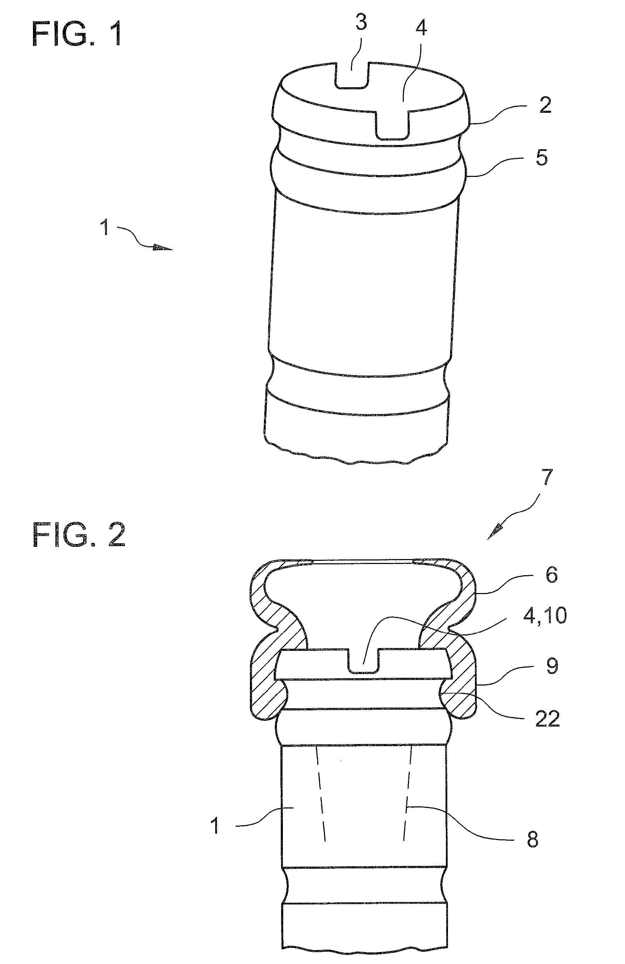

In der Fig. 1 ist schematisch und in einer perspektivischen Ansicht ein oberer Bereich einer Melkbecherhülse 1 dargestellt. Die Melkbecherhülse 1 ist im Wesentlichen zylinderförmig ausgebildet. Sie weist an ihrem oberen freien Ende eine umlaufende Wulst 2 auf. Die Wulst 2 verjüngt sich zum freien Ende der Melkbecherhülse 1 hin, so dass diese eine im Wesentlichen kegelstumpfförmige Kontur aufweist. Aus der Darstellung in der Fig. 1 ist ersichtlich, dass von der Stirnseite der Melkbecherhülse her in Richtung des gegenüberliegenden Endes in der Wulst 2 Aussparungen 3, 4 vorgesehen sind. Die Aussparungen 3, 4 sind in dem dargestellten Ausführungsbeispiel diametral gegenüber ausgebildet. Auf die Funktionalität der Aussparungen wird im Weiteren gesondert eingegangen.

Beabstandet zu der Wulst 2 ist ein umlaufender Kragen 5 vorgesehen.

Die Wulst 2 und der umlaufende Kragen 5 bilden zusammen eine im Querschnitt im Wesentlichen trapezförmige Nut, in die ein entsprechender am Halterand 9 ausgebildeter Vorsprung 22 eingreift, wodurch eine im Wesentlichen fluiddichte Verbindung zwischen dem Halterand 9 des Kopfes 6 und dem oberen Bereich der Melkbecherhülse 1 hergestellt wird.

Die Fig. 2 zeigt den oberen Bereich der Melkbecherhülse in Verbindung mit einem Kopf 6 eines Zitzengummis 7. Der Kopf 6 des Zitzengummis 7 ist mit einem gestrichelt dargestellten Schaft 8 verbunden, welcher in der Melkbecherhülse 1 angeordnet ist. Unterhalb des Kopfes 6 ist ein Halterand 9 vorgesehen. Der Halterand 9 liegt an der Außenfläche der Melkbecherhülse 1 an und legt das Zitzengummi an der Melkbecherhülse 1 fest. Der Halterand 9 ist so ausgestaltet, dass dieser eine entsprechende Kontur aufweist, welche die Wulst 2 umgreift. Durch den Kragen 5 wird eine Begrenzung erreicht, dass das Zitzengummi 7 nicht zu tief in die Melkbecherhülse 1 eingeführt wird.

Das Zitzengummi 7 wird in einer bestimmten Orientierung in die Melkbecherhülse 1 eingebracht. Hierzu weist das Zitzengummi 7 entsprechende Vorsprünge 10 auf, die in die Aussparungen 3, 4 eingreifen, so dass eine definierte Montagelage des Zitzengummis 7 vorgegeben wird.

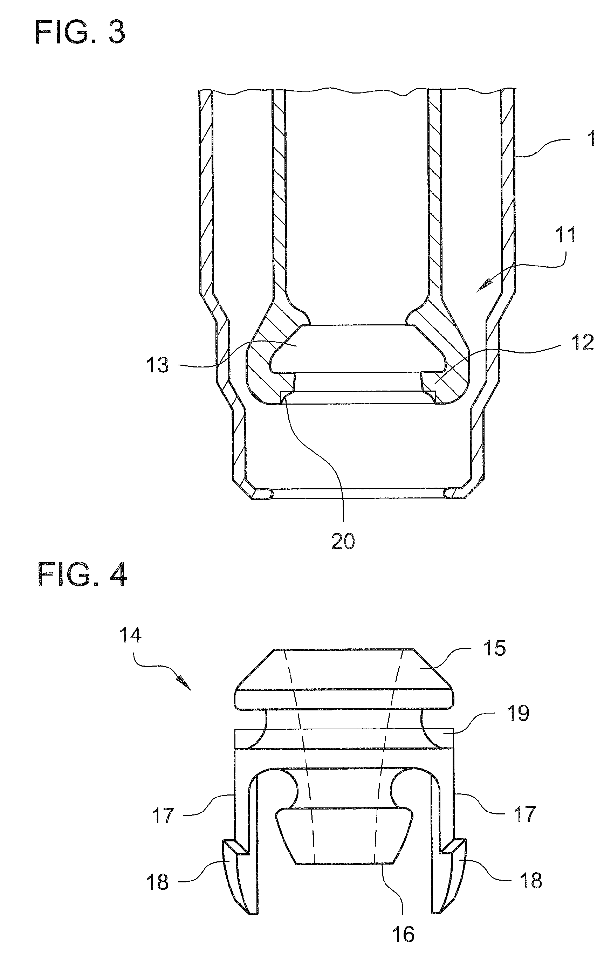

Die Lage des Zitzengummis 7 in der Melkbecherhülse 1 ist in der Fig. 3 dargestellt. Aus der Fig. 3 ist ersichtlich, dass der, dem Kopf 6 gegenüberliegende Endbereich 11, einen innen liegenden und umlaufenden Rand 12 aufweist, durch den der lichte Querschnitt des Schaftes 8 verringert wird. In Richtung des Kopfes 6 betrachtet, weist der Endbereich 11 eine im Wesentlichen kegelförmig ausgebildete Aufnahme 13 auf.

Fig. 4 zeigt ein Verbindungselement 14. Das Verbindungselement 14 weist einen ersten pilzartig ausgebildeten Abschnitt 15 auf. Der Abschnitt 15 weist eine Kontur auf, der dem Endbereich 11 des Zitzengummis angepasst ist. Das andere Ende des Verbindungselementes 14 weist einen zweiten pilzartig ausgebildeten Abschnitt 16 auf. Aus der Fig. 4 ist ersichtlich, dass beabstandet zum Abschnitt 16 und in Längsrichtung des Verbindungselementes 14 zwei gegenüberliegend ausgebildete Stege 17 vorgesehen sind. Die Stege 17 sind federelastisch. Sie weisen an ihren freien Enden jeweils Vorsprünge 18 auf.

Das Verbindungselement 14 wird mit dem Endbereich 11 des Zitzengummis verbunden. Hierbei greift der pilzartig ausgebildete Abschnitt 15 in die Aufnahme 13 ein, so dass eine formschlüssige und kraftschlüssige Verbindung zwischen dem Verbindungselement 14 und dem Zitzengummi hergestellt wird.

Das Verbindungselement 14 kann mit Positionierelementen 19 ausgestattet sein, wie dies aus der Fig. 4 ersichtlich ist. Die Positionierelemente 19 greifen in entsprechende Aussparungen 20 im Endbereich 11 des Zitzengummis, wenn das Verbindungselement 14 mit dem Zitzengummi 7 verbunden ist, wodurch eine definierte Einbaulage des Verbindungselementes 14 in Bezug auf das Zitzengummi 7 erreicht wird.

Der Abschnitt 16 des Verbindungselementes 14 ist so ausgebildet, dass dieser zur Verbindung mit einem Milchschlauch geeignet und bestimmt ist.

Zur Ausbildung eines Melkbechers wird zunächst das Verbindungselement 14 mit dem Zitzengummi 7 verbunden. Das Zitzengummi 7 wird in die Melkbecherhülse 1 eingeführt. Das Zitzengummi 7 wird soweit in die Melkbecherhülse gedrückt, bis die Verbindung des Kopfes 6 des Zitzengummis mit dem oberen Bereich der Melkbecherhülse erzeugt ist.

Das Verbindungselement 14, welches mit dem Zitzengummi 7 verbunden ist, wird soweit aus der Melkbecherhülse 1 herausgezogen, bis die Vorsprünge 18 hinter den unteren Rand 20 greifen. Die lichte Breite der Melkbecherhülse 1 ist vorzugsweise so gewählt, dass während der Montage die Stege 17 zueinander gedrückt werden, und dann auffedern, wenn die Vorsprünge 18 aus der Melkbecherhülse vorstehen. Die Stege 17 können mit entsprechenden Werkzeugeingriffsbereichen ausgebildet sein, so dass mittels nicht dargestellter Werkzeuge, die in die nicht dargestellten Werkzeugeingriffsbereiche eingreifen, die Stege 17 aus der Melkbecherhülse herausgezogen werden können.

Anschließend kann ein Milchschlauch 21 mit dem Verbindungselement 14 verbunden werden.

Durch diese Ausgestaltung des Melkbechers wird eine vereinfachte Montage des Melkbechers erreicht.

Vorteilhaft ist eine Ausgestaltung des Endbereiches 11 sowie des oberen Abschnittes 15 des Verbindungselementes 14, in der Weise, dass bei einer Verbindung des Verbindungselementes 14 mit dem Endbereich 11 des Zitzengummis, dieser eine Aufweitung, d. h. eine Vergrößerung des Außenquerschnittes, erfährt. Wird das Verbindungselement 14 an der Melkbecherhülse festgelegt, so kommt der Mantel des Endbereichs 11 zur Anlage an einen innen liegenden Bereich der Melkbecherhülse, wobei diese Anlage so ist, dass eine vorzugsweise fluiddichte Verbindung zwischen dem Endbereich 11 und der Melkbecherhülse 1 hergestellt wird.

Um zu vermeiden, dass während des Gebrauches der Melkbecherhülse Torsionskräfte in das Zitzengummi eingebracht werden, weist vorzugsweise der Endbereich der Melkbecherhülse entsprechende Ausnehmungen auf, in die die Vorsprünge 18 wenigstens teilweise hineinragen, wodurch die Position des Verbindungselementes 14 hinsichtlich der Melkbecherhülse 1 definiert wird.

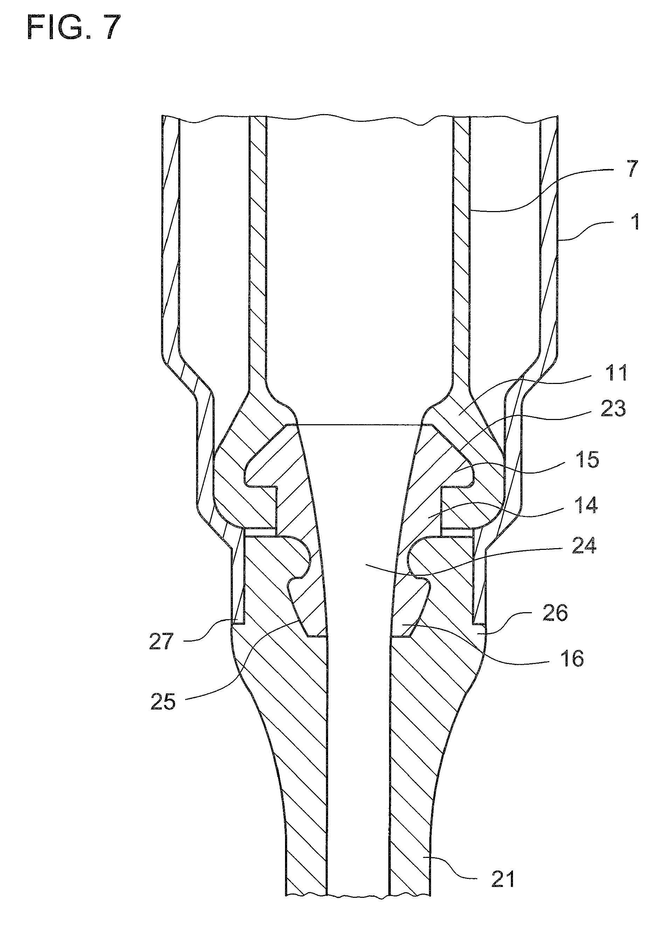

In der Fig. 7 ist ein zweites Ausführungsbeispiel eines Melkbechers dargestellt. Hierbei zeigt die Fig. 7 den unteren Bereich des Melkbechers im Schnitt.

Der Melkbecher weist eine Melkbecherhülse 1 auf. Innerhalb der Melkbecherhülse ist ein Zitzengummi 7 angeordnet. Das Zitzengummi 7 weist einen Endbereich 11 auf. Mit dem Endbereich 11 des Zitzengummis 7 ist ein Verbindungselement 14 verbunden. Das Verbindungselement 14 weist einen im Wesentlichen pilzkopfartigen Abschnitt 15 auf, der in eine entsprechende ausgestaltete Aufnahme 23 des Endbereichs 11 des Zitzengummis 7 hineinragt. Die Verbindung des Zitzengummis 7 mit dem Verbindungselement 14 ist fluiddicht, so dass Milch aus dem Zitzengummi durch den im Verbindungselement 14 ausgebildeten Kanal 24 abströmen kann. Die Außenmantelfläche des Endbereichs 11 liegt an der Innenmantelfläche des Melkbechers 1 an. Zwischen dem Endbereich 11 und der Melkbecherhülse 1 besteht eine fluiddichte Verbindung, so dass in dem Melkbecherzwischenraum, das heißt den Raum zwischen dem Zitzengummi und der Melkbecherhülse, keine Luft oder Flüssigkeit ungewollt eindringen kann.

Das Verbindungselement 14 weist einen Abschnitt 16 auf, der pilzartig ausgebildet ist. Der pilzartig ausgebildete Abschnitt 16 greift in eine entsprechend ausgebildete Aufnahme 25 im Endabschnitt des Milchschlauchs 21. Die Verbindung zwischen dem Milchschlauch 21 und dem Verbindungselement 14 ist vorzugsweise fluiddicht.

Der Milchschlauch 21 weist einen umlaufenden Kragen 26 auf, der an der Stirnfläche 27 der Melkbecherhülse 1 anliegt. Die Verbindung zwischen dem Milchschlauch 21 und der Melkbecherhülse 1 ist insbesondere fluiddicht ausgebildet.

Zusätzlich oder alternativ kann die Melkbecherhülse 1 und/oder der Milchschlauch 21 mehrere radial einwärts bzw. radial auswärts gerichtete Vorsprünge bzw. Aufnahmen aufweisen, deren Konturen korrespondierend ausgebildet sind, so dass eine formschlüssige und/oder kraftschlüssige Verbindung zwischen dem Milchschlauch 21 und der Melkbecherhülse 1 hergestellt werden kann.

Zur Ausbildung des Melkbechers werden das Zitzengummi 7, das Verbindungselement 14 und der Milchschlauch 21 miteinander zu einer Baueinheit verbunden. Der Milchschlauch 21 wird durch die Melkbecherhülse hindurchgezogen. Der Kopf des Zitzengummis wird am oberen Endbereich der Melkbecherhülse mittels des Halterandes 9 festgelegt. Durch Aufbringen einer Zugkraft in den Milchschlauch wird dieser so weit aus der Melkbecherhülse 1 herausgezogen, bis der Kragen 26 an der Stirnfläche der Melkbecherhülse 1 anliegt.

Die Montage des Melkbechers kann ohne zusätzliche Werkzeuge erfolgen.

In Abhängigkeit von der Ausgestaltung des Verbindungselementes 14 können in das Zitzengummi 7 unterschiedliche Vorspannungen eingeleitet werden. Darüber hinaus kann die radiale Kraft zwischen dem Endbereich 11 des Zitzengummis und der Melkbecherhülse variiert werden.

Es ist nicht zwingend, dass die Verbindung zwischen dem Milchschlauch 21 und der Melkbecherhülse 1 fluiddicht ist. Es ist ausreichend, wenn die Verbindung zwischen dem Milchschlauch 21 und dem Verbindungselement 14 fluiddicht ist. Durch die dargestellte Ausführungsform wird ein geringer Kraftaufwand zum Wechseln des Zitzengummis sowie des Milchschlauchs erreicht. Die Montage und Demontage des Melkbechers wird durch die Erfindung wesentlich vereinfacht.

### Bezugszeichenliste

- 1: Melkbecherhülse
- 2: Wulst
- 3: Aussparung
- 4: Aussparung
- 5: Kragen
- 6: Kopf
- 7: Zitzengummi
- 8: Schaft
- 9: Halterand
- 10: Vorsprung
- 11: Endbereich
- 12: Rand
- 13: Aufnahme
- 14: Verbindungselement
- 15: Abschnitt
- 16: Abschnitt
- 17: Steg
- 18: Vorsprung
- 19: Positionierelement
- 20: Randbereich
- 21: Milchschlauch
- 22: Vorsprung
- 23: Aufnahme
- 24: Kanal
- 25: Aufnahme
- 26: Kragen
- 27: Stirnfläche

## Patentansprüche

1. Melkbecher umfassend eine Melkbecherhülse (1), ein in der Melkbecherhülse (1) angeordnetes Zitzengummi (7), welches einen Kopf (6) und einen dem Kopf (7) gegenüberliegenden Endbereich (11) aufweist, und ein Verbindungselement (14), welches mit dem Endbereich (11) verbunden ist, **dadurch gekennzeichnet, dass** das Verbindungselement (14) lösbar mit der Melkbecherhülse (1) verbunden ist.

2. Melkbecher nach Anspruch 1, **dadurch gekennzeichnet, dass** das Verbindungselement (14) formschlüssig mit der Melkbecherhülse (1) verbunden ist.

3. Melkbecher nach Anspruch 1 oder 2, **dadurch gekennzeichnet, dass** das Verbindungselement (14) mittels einer Rastverbindung mit der Melkbecherhülse (1) verbunden ist.

4. Melkbecher nach Anspruch 1, 2 oder 3, **dadurch gekennzeichnet, dass** das Verbindungselement (14) wenigstens zwei sich in axialer Richtung erstreckende federelastische Stege (17) aufweist, welche mit der Melkbecherhülse (1) verbunden sind.

5. Melkbecher nach Anspruch 4, **dadurch gekennzeichnet, dass** der Steg (17) einen Vorsprung (18) aufweist, der an einem Randbereich (20) der Melkbecherhülse (1) anliegt.

6. Melkbecher umfassend eine Melkbecherhülse (1), ein in der Melkbecherhülse (1) angeordnetes Zitzengummi (7), welches einen Kopf (6) und einen dem Kopf (7) gegenüberliegenden Endbereich (11) aufweist, und ein Verbindungselement (14), welches einen Milchschlauch () mit dem Zitzengummi (7) verbindet, **dadurch gekennzeichnet, dass** der Milchschlauch (21) wenigstens ein Mittel aufweist, durch welches das Zitzengummi (7) in der Melkbecherhülse (1) festgelegt wird.

7. Melkbecher nach Anspruch 6, **dadurch gekennzeichnet, dass** der Milchschlauch (21) wenigstens einen sich in Umfangsrichtung erstreckenden Kragen (26) aufweist, welcher vorzugsweise zu Anlage an eine Stirnfläche (27) der Melkbecherhülse (1) bringbar ist.

8. Melkbecher nach Anspruch 7. **dadurch gekennzeichnet, dass** der Kragen (26) einen im Wesentlichen dreieckförmigen Querschnitt aufweist.

9. Melkbecher nach wenigstens einem der vorhergehenden Ansprüche 1 bis 8, **dadurch gekennzeichnet, dass** das Verbindungselement (14) wenigstens einen Werkzeugeingriffsbereich aufweist.

10. Melkbecher nach wenigstens einem der vorhergehenden Ansprüche 1 bis 9, **dadurch gekennzeichnet, dass** der Endbereich (11) des Zitzengummis (7) am Innenmantel der Melkbecherhülse (1) anliegt.

11. Melkbecher nach einem der Ansprüche 1 bis 10, **dadurch gekennzeichnet, dass** das Verbindungselement (14) wenigstens formschlüssig mit dem Zitzengummi (7) verbunden ist.

12. Melkbecher nach Anspruch 11, **dadurch gekennzeichnet, dass** das Verbindungselement (14) einen im Wesentlichen pilzartig ausgebildeten Abschnitt (15) und das Zitzengummi (7) eine entsprechend ausgestaltete Aufnahme (13) aufweisen.

13. Melkbecher nach Anspruch 11 oder 12, **dadurch gekennzeichnet, dass** der Außendurchmesser des Endbereichs (11) des Zitzengummis (7) verbunden mit dem Verbindungselement (14) größer ist als der Außendurchmesser des Endbereichs (11) des Zitzengummis im unverbundenen Zustand.

14. Melkbecher nach einem der Ansprüche 1 bis 13, **dadurch gekennzeichnet, dass** die Melkbecherhülse (1) einen sich verjüngenden Endbereich aufweist.

15. Melkbecher nach wenigstens einem der vorhergehenden Ansprüche 1 bis 15, **dadurch gekennzeichnet, dass** die Melkbecherhülse (1) wenigstens eine Wulst (2) aufweist, welche in einen entsprechend ausgebildeten Halterand (9) des Kopfes (6) eingreift.
